# EUROPÄISCHE PATENTSCHRIFT

(11) **EP 0 994 818 B1**
(45) Veröffentlichungstag und Bekanntmachung des Hinweises auf die Patenterteilung: **23.06.2004**
(21) Anmeldenummer: 99923452.9
(22) Anmeldetag: 23.04.1999
(51) Int. Cl.: B65G 23/36, B08B 9/42

(54) **VERFAHREN ZUR EINSTELLUNG EINES KETTENFÖRDERERS IN EINER BEHANDLUNGSMASCHINE**
METHOD FOR SETTING A CHAIN CONVEYOR IN A PROCESSING MACHINE
PROCEDE POUR AJUSTER UN TRANSPORTEUR A CHAINE DANS UNE MACHINE DE TRAITEMENT

(30) Priorität: 07.05.1998 DE 19820346
(43) Veröffentlichungstag der Anmeldung: 26.04.2000
(73) Patentinhaber: SIG Simonazzi Germany GmbH, 22297 Hamburg (DE)
(72) Erfinder: HASLER, Uwe, D-22529 Hamburg (DE)
(74) Vertreter: Kloiber, Thomas, Dr. Dipl.-Phys.
(86) Internationale Anmeldenummer: PCT/EP1999/002746
(87) Internationale Veröffentlichungsnummer: WO 1999/057046

(56) Entgegenhaltungen:
- DE-A- 19 644 092

## Beschreibung

Die Erfindung betrifft ein Verfahren zur Einstellung einer Behandlungsmaschine, insbesondere einer Flaschenreinigungsmaschine, bei der eine zum Transport von zu behandelnden Gegenständen vorgesehene Transportkette in Schleifen, insbesondere meanderförmig, durch eine oder mehrere Behandlungsstationen im Maschinengehäuse geführt und an mindestens zwei Stellen durch Antriebe angetrieben ist, die im Normalbetrieb synchronisiert und relativ zueinander so einzustellen sind, daß die Transportkette in ihren Führungen weder strammgezogen noch gestaucht wird.

Derartige Behandlungsmaschinen sind insbesondere in der Ausführung als Flaschenreinigungsmaschine bekannt. In solchen Flaschenreinigungsmaschinen werden Flaschen in Flaschenträgern durch die Reinigungsstationen der Maschine geführt. Die Maschine besitzt einzelne in horizontaler Reihe angeordnete Behälter zur Aufnahme der Flaschen, die mit ihren Enden an Kettengliedern von Rollenketten befestigt sind. Die Rollenketten werden von Führungsschienen geführt und sind im Maschinengehäuse in vertikaler Ebene meanderförmig gefaltet angeordnet. Um Reibungsverluste, Kettenkräfte und Verschleiß in Grenzen zu halten, sind die Transportketten der bekannten Flaschenreinigungsmaschinen an mehreren Stellen angetrieben. Dies geschieht gewöhnlich mittels horizontal und parallel zueinander ausgerichteter Antriebswellen, auf denen je ein Kettenradpaar zum Eingriff in die Transportkette angeordnet ist. Typischerweise sind zwischen zwei und acht Antriebswellen vorgesehen.

Diese Antriebswellen müssen synchron angetrieben werden, damit die Transportkette zwischen zwei aufeinanderfolgenden Antriebswellen nicht unnötigen und in der Regel nachteiligen Druck- oder Zugkräften ausgesetzt ist, durch die die Transportkette und deren Führungsschienen beschädigt oder frühzeitig verschlissen werden könnte. Die Synchronisation der Antriebswellen kann durch mechanische Kopplung mittels Wellen, Getrieben oder Ketten erfolgen oder durch eine elektronische Gleichlaufregelung, wenn mehrere Antriebsmotoren für je eine Antriebswelle oder je eine Gruppe von Antriebswellen vorgesehen ist.

Zwischen je zwei in Zugrichtung der Transportkette aufeinanderfolgend angeordneten Antrieben muß das Kettenspiel so eingestellt werden, daß die Transportkette nicht zu lose und nicht zu stramm geführt ist. Zur Einstellung des gewünschten Kettenspiels wird die relative Drehposition aufeinanderfolgender Antriebswellen verändert. Wenn die Synchronisation der Antriebe durch mechanische Mittel erfolgt, kann das Kettenspiel durch Verstellung von Kupplungen oder Kettentrieben eingestellt werden. Bei elektronischer Synchronisation kann die Winkellage benachbarter Antriebe durch die unsynchrone Betätigung einzelner Antriebe verändert werden.

Bei den bekannten Einstellverfahren wird die Kettenspannung von einer mit der Wartung betrauten Person durch optische Überprüfung der Kettenlage vorgenommen. Diese Vorgehensweise hat grundsätzlich den Nachteil, daß für Ihre Durchführung eine geschulte Person erforderlich ist, die auf dem vorliegenden Gebiet einschlägige Erfahrung hat. Dies bedeutet einen hohen Zeit- und Personalaufwand und bringt die Gefahr, daß die Einstellung fehlerhaft durchgeführt wird. Weiterhin muß zur Feststellung der richtigen Ketteneinstellung gegebenenfalls auch die Lage der Kette innerhalb der Reinigungsstationen überprüft werden. Dies hat den Nachteil, daß dafür die Reinigungsflüssigkeiten abgelassen werden müssen. Da aber fehlerhafte Einstellungen einen schnellen Verschleiß von Transportkette, Führungen und Getrieben zur Folge haben, besteht ein Bedarf für ein weniger aufwendig und jederzeit zuverlässig und reproduzierbar durchführbares Einstellverfahren.

Es ist daher die Aufgabe der vorliegenden Erfindung, ein verbessertes Verfahren zur Einstellung einer Behandlungsmaschine anzugeben, das weitgehend automatisierbar ist und auf einfache Weise ohne geschultes und erfahrenes Personal durchgeführt werden kann.

Diese Aufgabe wird durch ein Verfahren mit den folgenden Verfahrensschritten gelöst:
a) Zwei in Vorwärtsrichtung der Transportkette aufeinanderfolgende Antriebe werden ausgewählt.
b) Die ausgewählten Antriebe werden asynchron betrieben, so daß sie den zwischen ihnen befindlichen Kettenabschnitt durch Erzeugen einer Längendifferenz strammziehen oder stauchen, wobei ein vom Antriebsmoment des einen oder beider Antriebe abhängiger Parameter gemessen wird.
c) Wenn der Parameter einen festgelegten Wert erreicht oder überschreitet, werden die Antriebe asynchron im Sinne einer Verkleinerung der zuvor erzeugten Längendifferenz um einen vorbestimmten Betrag betrieben.
d) Die so eingestellte relative Lage der beiden Antriebe zueinander wird nachfolgend beibehalten, insbesondere beim synchronen Betrieb der Antriebe.
e) Die vorhergegenden Verfahrensschritte werden auf weitere Antriebe angewandt, bis die Kettenlängen in allen einzustellenden Abschnitten eingestellt sind.

Das erfindungsgemäße Verfahren hat den Vorteil, daß es aus einfachen Verfahrensschritten besteht, die in Abhängigkeit von einfachen Parametern durchgeführt werden. Für die Durchführung ist daher kein geschultes und erfahrenes Personal erforderlich. Es kann auf einfache Weise automatisch durchgeführt werden. Das Verfahren ist einfach und zuverlässig, weil es auf besondere Meßeinrichtungen an oder in der Maschine, z.B. zur Messung der Kettenspannung und - position, verzichtet.

Der vorbestimmte Wert für den vom Antriebsmoment abhängigen Parameter wird dabei so festgelegt, daß das korrespondierende Antriebsmoment ein zur Straffung des jeweiligen Kettenabschnitts ausreichendes Antriebsmoment deutlich überschreitet und trotzdem noch nicht so groß wird, daß es ein Bauteil der Behandlungsmaschine, insbesondere die Transportkette oder den Antriebsmotor, unzulässig belasten könnte. Der zur Verkleinerung der zuvor erzeugten Längendifferenz bestimmte Betrag wird so festgelegt, daß der einzustellende Kettenabschnitt nicht zu locker und nicht zu stramm in seinen Führungen sitzt.

Vorzugsweise wird das Verfahren außerhalb der normalen Betriebszeit durchgeführt, insbesondere wenn dabei die Behandlungsmaschine zeitweise angehalten wird. Grundsätzlich ist das Verfahren aber auch während des normalen Betriebs durchführbar, indem zwei in Zugrichtung hintereinander angeordnete Antriebe mit geringfügig unterschiedlichen Geschwindigkeiten betrieben werden und der für die Anzeige eines strammgezogenen bzw. gestauchten Kettenabschnitts verwendete Parameter beispielsweise aus der Differenz zwischen den Antriebsmomenten der beiden Antriebe gebildet wird.

Während des Betriebs einer Behandlungsmaschine wird die Transportkette infolge von Verschleiß und Zugbelastung im Laufe der Zeit immer länger. Da es sich um eine Endloskette handelt, ist in einer Behandlungsmaschine gewöhnlich ein Abschnitt für die Aufnahme der so entstehenden überschüssigen Kettenlänge vorgesehen, in dem die Transportkette überlicherweise in Form einer Schleife mehr oder weniger stark durchhängt. Selbstverständlich wird das erfindungsgemäße Verfahrung nicht mit zwei Antrieben durchgeführt, die vor und nach einem solchen Ausgleichsabschnitt angeordnet sind.

In einer Weiterbildung des erfindungsgemäßen Verfahrens für eine Behandlungsmaschine mit Ausgleichsabschnitt ist vorgesehen, daß die Antriebsrichtung der zwischen dem einzustellenden Kettenabschnitt und dem Ausgleichsabschnitt angeordneten Antriebe zusammen mit dem einen ausgewählten Antrieb und/oder alle übrigen Antriebe zusammen mit dem anderen ausgewählten Antrieb synchron betrieben werden. Diese Maßnahme gewährleistet, daß beispielsweise bei einem Strammziehen des einzustellenden Kettenabschnitts nicht der benachbarte Kettenabschnitt gestaucht wird oder umgekehrt. Wenn wie vorgesehen alle vorangehenden bzw. allen nachfolgenden Antriebe synchron betrieben werden, wird eine solche Stauchung in den benachbarten Kettenabschnitten, die ein zusätzliches, das Meßergebnis verfälschendes Gegenmoment erzeugen könnte, mit Vorteil verhindert.

Bei bekannten Behandlungsmaschinen sind in der Regel alle zwischen jeweils zwei Antrieben befindlichen Kettenabschnitte bezüglich ihrer Länge und der geometrischen Form ihrer Führungen unterschiedlich ausgestaltet. In diesem Fall ist es besonders vorteilhaft, wenn für jeden einzustellenden Kettenabschnitt ein besonderer vom Antriebsmoment abhängiger Parameter vorgesehen ist, weil die optimale Ketteneinstellung im allgemeinen in jedem Kettenabschnitt bei einem anderen Antriebsmoment erfolgen muß.

Entsprechendes gilt für den Betrag, um den die Antriebe nach dem Erreichen eines vorbestimmten Antriebsmoments "zurückgestellt" werden müssen. In Weiterbildung des erfindungsgemäßen Verfahrens ist deshalb vorgesehen, daß für jeden einzustellenden Kettenabschnitt ein besonderer vorbestimmter Betrag für die Verkleinerung der zuvor erzeugten Längendifferenz vorgesehen ist.

Unter Umständen kann man eine genauere Einstellung des jeweiligen Kettenabschnitts erzielen, wenn diese nicht nur aus dem strammgezogenen oder dem gestauchten Zustand des Kettenabschnitts, sondern unter Berücksichtigung beider Zustände bestimmt wird. In einer Variante des erfindungsgemäßen Verfahrens ist daher vorgesehen, daß im Rahmen der Verfahrensschritte b und c der einzustellende Kettenabschnitt zunächst bis zur Erreichung eines ersten Parameterwertes strammgezogen und dann unter Registrierung der dazu erforderlichen Kettenlänge bis zur Erreichung eines zweiten Parameterwertes gestaucht wird oder umgekehrt, und daß der Betrag des nachfolgenden Einstellschritts von der registrierten Kettenlänge abhängt. Der Einstellschritt wird also nicht starr aus der strammgezogenen bzw. der gestauchten Stellung vorgenommen, sondern er hängt von der Längendifferenz des Kettenabschnitts zwischen der gestauchten und der strammgezogenen Stellung, also von beiden Positionen ab.

In einer bevorzugten Ausführungsform sind die Antriebe elektrisch ansteuerbar und das Verfahren wird mittels eines auf geeignete Weise programmierten Mikroprozessors automatisch durchgeführt. Ein programmierter Mikroprozessor stellt heutzutage die einfachste, vielseitigste und kostengünstigste Möglichkeit zur Realisierung einer automatischen Steuerung dar. In diesem Fall ist es von besonderem Vorteil, wenn die Antriebe mit Drehgebern zur Bestimmung ihrer relativen Winkellagen versehen sind, daß die Winkellagen abgespeichert werden und daß die Synchronisierung auf elektrischem Weg über die Ansteuerung der Antriebe erfolgt. Eine solche elektrische Synchronisierung erfordert, insbesondere bei der Verwendung eines programmierbaren Mikroprozessors, einen nur geringen Aufwand, ohne daß dafür teure mechanische Bauteile erforderlich wären.

Das erfindungsgemäße Verfahren läßt sich besonders einfach und kostengünstig durchführen, wenn die Antriebe Elektromotoren besitzen, deren Stromaufnahme als vom Antriebsmoment abhängiger Parameter gemessen wird. Bei dieser Ausführungsform sind keinerlei zusätzliche Sensoren für die Messung des Antriebsmoments erforderlich.

Auch wenn die Erfindung hier in Verbindung mit rotierenden Elektromotoren beschrieben ist, umfaßt sie ebenso Antriebe mit elektrischen Linearmotoren. Dabei müssen gegebenenfalls die Begriffe Drehwinkel und Antriebsmoment durch die Begriffe Vorschub und Antriebskraft ersetzt werden.

Eine bevorzugt Ausführungsform des erfindungsgemäßen Verfahrens, die sich durch einen besonders einfachen Steuerungsablauf auszeichnet, sieht vor, daß ein in Vorwärtsrichtung der Transportkette nach dem Ausgleichsabschnitt und dem einzustellenden Kettenabschnitt angeordneter erster elektrischer Antrieb festgesetzt und der nachfolgend angeordnete zweite elektrische Antrieb synchron mit allen nachfolgenden Antrieben in Vorwärtsrichtung betrieben wird, bis seine Stromaufnahme einen vorbestimmten Wert überschreitet, daß dann der zweite Antrieb zusammen mit allen nachfolgenden Antrieben gestoppt, um einen bestimmten Drehwinkel entgegen der Vorwärtsrichtung zurückgedreht und anschließend festgesetzt wird, daß das Verfahren mit dem dritten und allen nachfolgenden Antrieben entsprechend fortgesetzt wird, bis der letzte, vor dem Ausgleichsabschnitt angeordnete Kettenabschnitt eingestellt ist.

Für den Fall, daß die vorhandene Antriebssteuerung einen Rückwärtsbetrieb der Antriebe nicht erlaubt, wird ein abgewandeltes Verfahren empfohlen, das ebenfalls einen besonders einfachen Steuerungsablauf aufweist. Dieses Verfahren beginnt genauso wie das vorbeschriebene Verfahren, sieht aber nach dem ersten Stoppen des zweiten Antriebs vor, daß der erste Antrieb um eine bestimmten Drehwinkel in Vorwärtsrichtung gedreht und anschließend zusammen mit dem zweiten Antrieb festgesetzt wird, daß das Verfahren mit dem dritten und allen nachfolgenden Antrieben entsprechend fortgesetzt wird, bis der letzte, vor dem Ausgleichsabschnitt angeordnete Kettenabschnitt eingestellt ist, wobei die vor dem einzustellenden Kettenabschnitt und die danach angeordneten Antriebe unter sich jeweils synchron betrieben oder zusammen festgesetzt werden.

In einer Weiterbildung liefert das erfindungsgemäße Verfahren neben einer korrekten Ketteneinstellung auch ein Maß für die im Laufe des normalen Betriebs der Behandlungsmaschine auftretende Kettenlängung und den damit verbundenen Kettenverschleiß. Bei dem so weitergebildeten Verfahren ist vorgesehen, daß die bei jeder Einstellung auftretenden Kettenlängendifferenzen gemessen und gespeichert werden und daß deren Summe als Indikator für die gesamte Kettenlängung und/oder den Kettenverschleiß ausgewertet wird. Selbstverständlich kann bei einer Behandlungsmaschine mit Ausgleichsabschnitt für den Kettendurchhang auch ein abgewandeltes Verfahren angewendet werden, bei dem die Länge des Kettendurchhangs im Ausgleichsabschnitt gemessen und als Indikator für die gesamte Kettenlängung und/oder den Kettenverschleiß ausgewertet wird.

Nachfolgend wird ein Ausführungsbeispiel der Erfindung anhand einer Zeichnung näher erläutert.

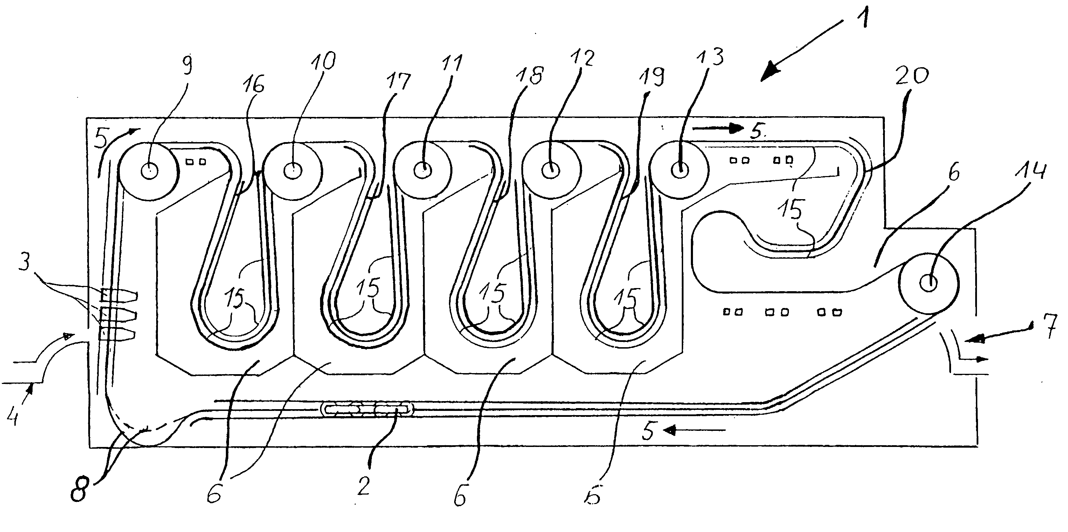

Die einzige Figur zeigt eine schematische Darstellung einer Flaschenreinigungsmaschine im Vertikalschnitt.

In der Figur erkennt man ein Maschinengehäuse 1, in dem eine in sich geschlossene Transportkette 2 in meanderförmigen Schleifen geführt ist. Die Transportkette 2 besitzt eine große Anzahl von Flaschenträgern 3, die in Zugrichtung hintereinander und in horizontaler Richtung, das heißt hier senkrecht zur Zeichenebene, in Reihen nebeneinander angeordnet sind. Eine Flaschenaufgabevorrichtung 4 bestückt in schneller Folge eine ganze Reihe der in Vorwärtsrichtung 5 vorbeiziehenden Flaschenträgern 3 mit zu reinigenden Flaschen. Die Transportkette 2 transportiert die Flaschenträger 3 mit den Flaschen durch verschiedene Behandlungsstationen 6, wo sie mit verschiedenen Flüssigkeiten gespült und gereinigt werden. Die gereinigten Flaschen werden durch eine Flaschenabgabevorrichtung 7 aus den Flaschenträgern 3 entfernt. Die leeren Flaschenträger 3 laufen dann wieder zurück, wobei kurz vor der Flaschenaufgabevorrichtung 4 ein Ausgleichsabschnitt 8 vorgesehen ist, der die im Laufe des Betriebs durch Verschleiß und Zugwirkung erzeugte überschüssige Kettenlänge in Form eines variablen Kettendurchhangs aufnimmt.

Zum Antrieb der Transportkette 2 sind sechs separate Antriebe 9, 10, 11, 12, 13, 14 vorgesehen, die jeweils aus einer von einem nicht gezeigten Elektromotor angetriebenen Antriebswelle mit je einem in die Transportkette 2 eingreifenden Kettenradpaar bestehen. Die Elektromotoren sind mittels einer nicht gezeigten elektronischen Steuerung miteinander synchronisiert. Die Steuerung erfolgt am besten durch einen programmierbaren Kleincomputer. Die Winkellagen der Antriebe 9 bis 14 werden mittels Drehgebern einzeln gemessen und ihre relative Lage untereinander kann zur Synchronisierung der Antriebe 9 bis 14 abgespeichert werden. Durch den synchronen Antrieb wird gewährleistet, daß die Transportkette 2 in ihren Führungen 15 weder strammgezogen noch gestaucht wird.

Für die Ketteneinstellung wählt das erfindungsgemäße Verfahren zunächst zwei Antriebe aus, vorzugsweise zunächst den in Vorwärtsrichtung 5 der Transportkette 2 nach dem Ausgleichsabschnitt 8 und dem einzustellenden ersten Kettenabschnitt 16 angeordneten ersten Antrieb 9 und den in Vorwärtsrichtung 5 nachfolgenden Antrieb 10.

Die ausgewählten Antriebe 9, 10 werden nun asynchron betrieben, indem der erste Antrieb 9 festgesetzt und der zweite Antrieb 10 in Vorwärtsrichtung 5 betrieben wird. Zusammen mit dem zweiten Antrieb 10 werden auch die nachfolgenden Antriebe 11 bis 14 in Vorwärtsrichtung betrieben, damit die Transportkette 2 in den nachfolgenden Kettenabschnitten 17 bis 20 weder strammgezogen noch gestaucht wird.

Während der Antrieb 10 in Vorwärtsrichtung 5 betrieben wird, wird seine Stromaufnahme als Maß für das aufgewandte Antriebsmoment gemessen. Durch die Förderung der Transportkette 2 durch den Antrieb 10 bei gleichzeitig festgesetztem Antrieb 9 wird eine Längendifferenz erzeugt, die zum Strammziehen des Kettenabschnitts 16 führt, bis dieser an seinen jeweiligen Führungen 15 fest anliegt.

Wenn jetzt die Stromaufnahme des Antriebs 10 einen vorbestimmten Wert überschreitet, werden alle Antriebe 10 bis 14 angehalten und anschließend zusammen um einen vorbestimmten Drehwinkel entgegen der Vorwärtsrichtung 5 zurückgedreht, wobei der Drehwinkel am Antrieb 10 gemessen wird.

Der vorbestimmte Wert für die Stromaufnahme wird selbstverständlich so festgelegt, daß das korrespondierende Antriebsmoment größer als ein zur Straffung des jeweiligen Kettenabschnitts ausreichendes Antriebsmoment und kleiner als ein die Maschine in irgendeinem ihrer Bestandteile schädigendes Antriebsmoment ist. Der vorbestimmte Drehwinkel wird so festgelegt, daß der einzustellende Kettenabschnitt der Transportkette 2 nicht zu locker und nicht zu stramm in seinen Führungen 15 sitzt.

Alternativ kann auch bei festgesetzten Antrieben 10 bis 14 der Antrieb 9 um einen vorbestimmten Drehwinkel in Vorwärtsrichtung 5 gedreht werden. Diese zweite Möglichkeit ist vorzugsweise für Maschinen geeignet, deren Antriebe nicht oder nur mit großem Aufwand entgegen der Vorwärtsrichtung 5 betrieben werden können.

Nachdem nun die gewünschte Kettenlänge im ersten Kettenabschnitt 16 eingestellt ist, geht das erfindungsgemäße Verfahren zur Einstellung des zweiten Kettenabschnitts 17 über, indem einerseits die Antriebe 9 und 10 und andererseits die Antriebe 11 bis 14 miteinander synchron gekoppelt werden.

Zunächst werden die Antriebe 9 und 10 festgesetzt und die Antriebe 11 bis 14 zusammen in Vorwärtsrichtung 5 betrieben, bis der Kettenabschnitt 17 an seinen Führungen 15 fest anliegt und bis die Stromaufnahme des Antriebs 11 einen vorbestimmten Wert überschreitet, der sich je nach Bedarf durchaus von dem für die Einstellung des vorangegangenen Kettenabschnitts 16 oder aller nachfolgenden Kettenabschnitte 18 bis 20 vorgesehenen Wert unterscheiden kann.

Jetzt werden wieder alle Antriebe 11 bis 14 gestoppt und anschließend um einen am Antrieb 11 gemessenen, vorbestimmten Drehwinkel entgegen der Vorwärtsrichtung 5 betrieben, wobei dieser Drehwinkel sich ebenfalls von dem für die Einstellung des vorangegangenen Kettenabschnitts 16 oder aller nachfolgenden Kettenabschnitte 18 bis 20 vorgesehenen Drehwinkel unterscheiden kann.

Als Alternative zum Zurückdrehen der Antriebe 11 bis 14 können selbstverständlich auch die beiden Antriebe 9 und 10 zusammen synchron in Vorwärtsrichtung um den vorbestimmten Drehwinkel gedreht werden.

Nach der Einstellung des Kettenabschnitts 17 folgt in entsprechender Fortführung des Verfahrens der Kettenabschnitt 18, indem die Antriebe 9 bis 11 festgesetzt und die Antriebe 12 bis 14 zur Straffung des Kettenabschnitts 18 betrieben werden. Das Verfahren endet erst nach der Einstellung des letzten Kettenabschnitts 20, wobei die Antriebe 9 bis 13 festgesetzt und der Antrieb 14 alleine in Vorwärtsrichtung 5 betrieben wird, bis der Kettenabschnitt 20 an seinen Führungen 15 fest anliegt. Der letzte Verfahrensschritt erfolgt, nachdem die Stromaufnahme des Antriebs 14 einen vorbestimmten Wert überschritten hat, indem der Antrieb 14 um einen vorbestimmten Drehwinkel zurückgedreht oder, als Alternative, alle Antriebe 9 bis 13 zusammen synchron um einen vorbestimmten Drehwinkel in Vorwärtsrichtung 5 gedreht werden.

Eine durch Längung oder Verschleiß der Transportkette 2 erzeugte überschüssige Kettenlänge wird durch das erfindungsgemäße Verfahren in den Ausgleichsabschnitt 8 befördert und trägt dort zu einem größeren Durchhang der Transportkette 2 bei. Dabei kann die Länge des Kettendurchhanges als Indikator für den Kettenverschleiß gemessen und bei Überschreiten einer festzulegenden Kettenlängung eine Wartung der Flaschenreinigungsmaschine durchgeführt werden, bevor es zu unvorhergesehenen und kostspieligen Ausfällen kommt.

Wenn die Flaschenreinigungsmaschine allerdings durch einen programmierbaren Mikroprozessor gesteuert wird, kann auf eine gesonderte Messung des Kettendurchhangs verzichtet werden, indem die bei jeder Einstellung auftretenden Kettenlängendifferenzen während der Einstellung gemessen und gespeichert werden, wobei deren Summe als Indikator für die gesamte Kettenlängung und somit den Kettenverschleiß ausgewertet wird. Dies kann insbesondere dadurch geschehen, daß die relativen Drehwinkel zweier in Folge angeordneter Antriebe vor und nach der Einstellung des eingeschlossenen Kettenabschnitts bestimmt und die Winkeldifferenz berechnet und abgespeichert wird.

Beispielsweise werden die Antriebe 9 und 10 vor der Einstellung des ersten Kettenabschnitts stets synchron angetrieben, so daß ihre beiden Drehwinkel fest gekoppelt sind. Während der Einstellung des Kettenabschnitts 16 wird diese Kopplung aufgehoben und es kommt zu einer relativen Verschiebung der Winkellagen um einen von der Längung des Kettenabschnitts 16 abhängigen Betrag. Nach der Einstellung werden die beiden Antriebe 9 und 10 wieder synchron miteinander gekoppelt, wobei sich jetzt allerdings die relative Winkellage des Antriebs 9 zur Winkellage des Antriebs 10 um eine Winkeldifferenz verändert hat. Diese Winkeldifferenz wird gespeichert genauso wie die bei der Einstellung der nachfolgenden Kettenabschnitte 17 bis 20 auftretenden Winkeldifferenzen. Die Summe aller Winkeldifferenzen wird dann zur Gesamtsumme der Winkeldifferenzen aus anderen Verfahrensdurchläufen addiert. Diese Gesamtsumme ist ein Maß für die gesamte Kettenlängung und damit auch für den Kettenverschleiß.

Das erfindungsgemäße Verfahren kann, insbesondere bei einer Steuerung durch einen programmierbaren Mikroprozessor, vollautomatisch durchgeführt werden, vorzugsweise außerhalb der normalen Betriebszeit der Flaschenreinigungsmaschine. Grundsätzlich wäre aber auch eine Durchführung des Verfahrens während des normalen Betriebs der Flaschenreinigungsmaschine denkbar.

In diesem Fall müßten die synchron laufenden Antriebe 9 bis 14 in zwei jeweils unter sich synchron laufende Gruppen unterteilt werden. Wenn beispielsweise der Kettenabschnitt 18 eingestellt werden soll, müßten einerseits die Antriebe 9 bis 11 und andererseits die Antriebe 12 bis 14 untereinander jeweils synchron betrieben werden. Die elektronische Steuerung würde dann beispielsweise die Drehgeschwindigkeit der miteinander gekoppelten Antriebe 12 bis 14 erhöhen und damit eine Verschiebung des relativen Drehwinkels gegenüber den gekoppelt betriebenen Antrieben 9 bis 11 erreichen.

Die Drehwinkeldifferenz könnte auf einfache Weise dadurch bestimmt werden, daß man den vom Drehgeber des Antriebs 12 abgelesenen Drehwinkel positiv und den am Drehgeber des Antriebs 11 ermittelten Drehwinkel negativ wertet. Insbesondere, wenn die Drehwinkel digital bzw. als Impulsfolge vorliegen, kann die Subtraktion auf einfache Weise durchgeführt werden. Beispielsweise könnte ein elektronischer Vorwärts/Rückwärtszähler die vom Drehgeber des Antriebs 12 gelieferten Pulse vorwärts und die vom Drehgeber des Antriebs 11 gelieferten Pulse rückwärts zählen, wobei der Zählerinhalt stets aus einer zur Drehwinkeldifferenz proportionalen Zahl besteht.

Durch dieses Vorgehen wird der Kettenabschnitt 18 gestrafft und liegt fest an seinen Führungen 15 an.

Dies führt zu einer erhöhten Reibung und damit zu einer erhöhten Stromaufnahme des Antriebs 12. Wenn nun beispielsweise die Stromaufnahme des Antriebs 12, des Antriebs 11 oder deren Summe bzw. Differenz einen vorgegebenen Wert überschreitet, könnte die Winkeldifferenz gespeichert und danach die gekoppelten Antriebe 12 bis 14 mit geringerer Drehgeschwindigkeit betrieben werden, bis die Winkeldifferenz zur Gruppe der Antriebe 9 bis 11 um einen vorbestimmten Betrag verkleinert ist. Jetzt ist die Kettenlänge des Kettenabschnitts 18 richtig eingestellt und alle Antriebe 9 bis 14 werden wieder einheitlich miteinander synchronisiert. Danach kann das Verfahren mit jedem beliebigen anderen Kettenabschnitt fortgesetzt werden, bis es vollständig durchgeführt ist.

### Bezugszeichenliste

- 1: Maschinengehäuase
- 2: Transportkette
- 3: Flaschenträger
- 4: Flaschenaufgabevorrichtung
- 5: Vorwärtsrichtung
- 6: Behandlungsstation
- 7: Flaschenabgabevorrichtung
- 8: Ausgleichsabschnitt
- 9: Antrieb
- 10: Antrieb
- 11: Antrieb
- 12: Antrieb
- 13: Antrieb
- 14: Antrieb
- 15: Führung
- 16: Kettenabschnitt
- 17: Kettenabschnitt
- 18: Kettenabschnitt
- 19: Kettenabschnitt
- 20: Kettenabschnitt

## Patentansprüche

1. Verfahren zur Einstellung einer Behandlungsmaschine, bei der eine zum Transport von zu behandelnden Gegenständen vorgesehene Transportkette (2) in Schleifen, insbesondere meanderförmig, durch eine oder mehrere Behandlungsstationen (6) im Maschinengehäuse (1) geführt und an mindestens zwei Stellen durch Antriebe (9, 10, 11, 12, 13, 14) angetrieben ist, die im Normalbetrieb synchronisiert und relativ zueinander so einzustellen sind, daß die Transportkette (2) in ihren Führungen (15) weder strammgezogen noch gestaucht wird, **gekennzeichnet durch** die folgenden Verfahrensschritte:
a) zwei in Vorwärtsrichtung der Transportkette aufeinanderfolgende Antriebe (9 bis 14) werden ausgewählt;
b) die ausgewählten Antriebe (9 bis 14) werden asynchron betrieben, so daß sie den zwischen ihnen befindlichen Kettenabschnitt (16 bis 20) **durch** Erzeugen einer Längendifferenz strammziehen oder stauchen, wobei ein vom Antriebsmoment des einen oder beider Antriebe (9 bis 14) abhängiger Parameter gemessen wird;
c) wenn der Parameter einen festgelegten Wert erreicht oder überschreitet, werden die Antriebe (9 bis 14) asynchron im Sinne einer Verkleinerung der zuvor erzeugten Längendifferenz um einen vorbestimmten Betrag betrieben;
d) die so eingestellte relative Lage der beiden Antriebe (9 bis 14) zueinander wird nachfolgend beibehalten, insbesondere beim synchronen Betrieb der Antriebe (9 bis 14);
e) die vorhergehenden Verfahrensschritte werden auf weitere Antriebe (9 bis 14) angewandt, bis die Kettenlängen in allen einzustellenden Kettenabschnitten (16 bis 20) eingestellt sind.

2. Verfahren nach Anspruch 1 zur Einstellung einer Behandlungsmaschine, die einen Ausgleichsabschnitt (8) für die Aufnahme von überschüssiger Kettenlänge aufweist, **dadurch gekennzeichnet, daß** die in Antriebsrichtung (5) zwischen dem einzustellenden Kettenabschnitt (16 bis 20) und dem Ausgleichsabschnitt (8) angeordneten Antriebe (9 bis 14) zusammen mit dem einen ausgewählten Antrieb (9 bis 14) und/oder alle übrigen Antriebe (9 bis 14) zusammen mit dem anderen ausgewählten Antrieb (9 bis 14) synchron betrieben werden.

3. Verfahren nach Anspruch 1 oder 2, **dadurch gekennzeichnet, daß** für jeden einzustellenden Kettenabschnitt (16 bis 20) ein besonderer vom Antriebsmoment abhängiger Parameter vorgesehen ist.

4. Verfahren nach einem der vorhergehenden Ansprüche, **dadurch gekennzeichnet, daß** für jeden einzustellenden Kettenabschnitt (16 bis 20) ein besonderer vorbestimmter Betrag für die Verkleinerung der zuvor erzeugten Längendifferenz vorgesehen ist.

5. Verfahren nach einem der vorhergehenden Ansprüche, **dadurch gekennzeichnet, daß** im Rahmen der Verfahrensschritte b und c der einzustellende Kettenabschnitt (16 bis 20) zunächst bis zur Erreichung eines ersten Parameterwertes strammgezogen und dann unter Registrierung der dazu erforderlichen Kettenlänge bis zur Erreichung eines zweiten Parameterwertes gestaucht wird oder umgekehrt, und daß der Betrag des nachfolgenden Einstellschritts von der registrierten Kettenlänge abhängt.

6. Verfahen nach einem der vorhergehenden Ansprüche, **dadurch gekennzeichnet, daß** die Antriebe (9 bis 14) elektrisch ansteuerbar sind, und daß das Verfahren mittels eines auf geeignete Weise programmierten Mikroprozessors automatisch durchführbar ist.

7. Verfahren nach Anspruch 6, **dadurch gekennzeichnet, daß** die Antriebe (9 bis 14) mit Drehgebern zur Bestimmung ihrer relativen Winkellagen versehen sind, daß die Winkellagen abspeicherbar sind, und daß die Synchronisierung auf elektrischem Weg über die Ansteuerung der Antriebe (9 bis 14) erfolgt.

8. Verfahren nach einem der vorhergehenden Ansprüche, **dadurch gekennzeichnet, daß** die Antriebe (9 bis 14) Elektromotoren aufweisen, deren Stromaufnahme als vom Antriebsmoment abhängiger Parameter gemessen wird.

9. Verfahren nach einem der vorhergehenden Ansprüche, **dadurch gekennzeichnet, daß** ein in Vorwärtsrichtung der Transportkette (2) nach dem Ausgleichsabschnitt (8) und vor dem einzustellenden Kettenabschnitt (16 bis 20) angeordneter erster elektrischer Antrieb (9 bis 14) festgesetzt und der nachfolgend angeordnete zweite elektrische Antrieb (9 bis 14) synchron mit allen nachfolgenden elektrischen Antrieben (9 bis 14) in Vorwärtsrichtung (5) betrieben wird, bis seine Stromaufnahme einen vorbestimmten Wert überschreitet, daß dann der zweite Antrieb (9 bis 14) zusammen mit allen nachfolgenden Antrieben (9 bis 14) gestoppt, um einen bestimmten Drehwinkel entgegen der Vorwärtsrichtung (5) zurückgedreht und anschließend festgesetzt wird, daß das Verfahren mit dem dritten und den nachfolgenden Antrieben (9 bis 14) entsprechend fortgesetzt wird, bis der letzte, vor dem Ausgleichsabschnitt (8) angeordnete Kettenabschnitt (16 bis 20) eingestellt ist.

10. Verfahren nach einem der vorhergehenden Ansprüche, **dadurch gekennzeichnet, daß** ein in Vorwärtsrichtung (5) der Transportkette (2) nach einem Ausgleichsabschnitt (8) und vor dem einzustellenden Kettenabschnitt (16 bis 20) angeordneter erster elektrischer Antrieb (9 bis 14) festgesetzt und der nachfolgend angeordnete zweite elektrische Antrieb (9 bis 14) in Vorwärtsrichtung (5) betrieben wird, bis seine Stromaufnahme einen vorbestimmten Wert überschreitet, daß der zweite Antrieb (9 bis 14) zusammen mit den nachfolgenden Antrieben (9 bis 14) gestoppt und der erste Antrieb (9 bis 14) um einen bestimmten Drehwinkel in Vorwärtsrichtung gedreht und anschließend zusammen mit dem zweiten Antrieb (9 bis 14) festgesetzt wird, daß das Verfahren mit dem dritten und allen nachfolgenden Antrieben (9 bis 14) entsprechend fortgesetzt wird, bis der letzte, vor dem Ausgleichsabschnitt (8) angeordnete Kettenabschnitt (16 bis 20) eingestellt ist, wobei die vor dem einzustellenden Kettenabschnitt (16 bis 29) und die danach angeordneten Antriebe (9 bis 14) unter sich jeweils synchron betrieben oder zusammen festgesetzt werden.

11. Verfahren nach einem der vorhergehenden Ansprüche, **dadurch gekennzeichnet, daß** die bei jeder Einstellung auftretenden Kettenlängendifferenzen gemessen und gespeichert werden, und daß deren Summe als Indikator für die gesamte Kettenlängung und/oder den Kettenverschleiß ausgewertet wird.

12. Verfahren nach Anspruch 11, **dadurch gekennzeichnet, daß** die Länge des Kettendurchhanges im Ausgleichsabschnitt (8) gemessen und als Indikator für die gesamte Kettenlängung und/oder den Kettenverschleiß ausgewertet wird.

13. Behandlungsmaschine für die Behandlung von Gegenständen, insbesondere Flaschenreinigungsmaschine, **gekennzeichnet durch** eine programmierte Steuerung zur Durchführung eines Einstellungsverfahrens nach einem der vorhergehenden Ansprüche.

## Claims

1. Method of setting a handling machine in which a transporting chain (2), which is provided for transporting articles which are to be treated, is guided in loops, in particular in meandering fashion, through one or more handling stations (6) in the machine housing (1) and is driven at at least two locations by drives (9, 10, 11, 12, 13, 14) which are synchronized during normal operation and can be set relative to one another such that the transporting chain (2) is neither pulled tight nor slackened in its guides (15), **characterized by** the following method steps:
a) two drives (9 to 14) which follow one after the other in the forward direction of the transporting chain are selected;
b) the selected drives (9 to 14) are operated asynchronously, with the result that they pull tight or slacken the chain section (16 to 20) located between them by producing a difference in length, a parameter which is dependent on the drive torque of one or both drives (9 to 14) being measured;
c) when the parameter reaches or exceeds a fixed value, the drives (9 to 14) are operated asynchronously in order to reduce the previously produced difference in length by a predetermined extent;
d) the position of the two drives (9 to 14) relative to one another which is set in this way is subsequently maintained, in particular during synchronous operation of the drives (9 to 14);
e) the preceding method steps are applied to further drives (9 to 14) until the chain lengths in all the chain sections (16 to 20) which are to be set are set.

2. Method according to Claim 1 of setting a handling machine which has a compensating section (8) for accommodating excess chain length, **characterized in that** the drives (9 to 14) which, as seen in the drive direction (5), are arranged between the compensating section (8) and the chain section (16 to 20) which is to be set are driven synchronously together with the one selected drive (9 to 14) and/or all the rest of the drives (9 to 14) are driven synchronously together with the other selected drive (9 to 14).

3. Method according to Claim 1 or 2, **characterized in that** a particular parameter which is dependent on the drive torque is provided for each chain section (16 to 20) which is to be set.

4. Method according to one of the preceding claims, **characterized in that** a particular predetermined extent for reducing the previously produced difference in length is provided for each chain section (16 to 20) which is to be set.

5. Method according to one of the preceding claims, **characterized in that**, within the context of the method steps b and c, the chain section (16 to 20) which is to be set is first of all pulled tight until a first parameter value is reached and then, with the chain length which is necessary for this purpose being registered, is slackened until a second parameter value is reached, or vice versa, and **in that** the extent of the subsequent setting step depends on the registered chain length.

6. Method according to one of the preceding claims, **characterized in that** the drives (9 to 14) can be activated electrically, and **in that** the method can be implemented automatically by means of a suitably programmed microprocessor.

7. Method according to Claim 6, **characterized in that** the drives (9 to 14) are provided with rotary transducers for determining their relative angled positions, **in that** the angled positions can be stored, and **in that** electrical synchronization takes place via the activation of the drives (9 to 14).

8. Method according to one of the preceding claims, **characterized in that** the drives (9 to 14) have electric motors, the current consumption of which is measured as a parameter which is dependent on the drive torque.

9. Method according to one of the preceding claims, **characterized in that** a first electric drive (9 to 14), which, as seen in the forward direction of the transporting chain (2), is arranged downstream of the compensating section (8) and upstream of the chain section (16 to 20) which is to be set, is arrested and the subsequent, second electric drive (9 to 14) is operated synchronously with all the subsequent electric drives (9 to 14) in the forward direction (5) until its current consumption exceeds a predetermined value, **in that** the second drive (9 to 14), together with all the subsequent drives (9 to 14), is then stopped, rotated back counter to the forward direction (5) by a certain angle of rotation and subsequently arrested, and **in that** the method is correspondingly continued with the third and the subsequent drives (9 to 14) until the final chain section (16 to 20) arranged upstream of the compensating section (8) has been set.

10. Method according to one of the preceding claims, **characterized in that** a first electric drive (9 to 14), which, as seen in the forward direction (5) of the transporting chain (2), is arranged downstream of a compensating section (8) and upstream of the chain section (16 to 20) which is to be set, is arrested and the subsequent, second electric drive (9 to 14) is operated in the forward direction (5) until its current consumption exceeds a predetermined value, **in that** the second drive (9 to 14), together with the subsequent drives (9 to 14), is stopped and the first drive (9 to 14) is rotated in the forward direction by a certain angle of rotation and subsequently arrested together with the second drive (9 to 14), and **in that** the method is correspondingly continued with the third and all subsequent drives (9 to 14) until the final chain section (16 to 20) arranged upstream of the compensating section (8) has been set, the drives (9 to 14) which are arranged upstream of the chain section (16 to 20) which is to be set and the drives (9 to 14) which are arranged downstream of the latter being operated synchronously in each case or arrested together.

11. Method according to one of the preceding claims, **characterized in that** the differences in chain length which arise during each setting are measured and stored, and **in that** the sum thereof is evaluated as an indicator of the overall chain lengthening and/or of the wear to the chain.

12. Method according to Claim 11, **characterized in that** the length of the chain sagging in the compensating section (8) is measured and is evaluated as an indicator of the overall chain lengthening and/or of the wear to the chain.

13. Handling machine for handling articles, in particular a bottle-cleaning machine, **characterized by** a programmed control means for implementing a setting method according to one of the preceding claims.

## Revendications

1. Procédé pour le réglage d'une machine de traitement dans laquelle une chaîne de transport (2) prévue pour le transport d'objets à traiter est guidée en boucles, en particulier en méandres, à travers un ou plusieurs postes de traitement (6) dans le corps de machine (1) et est entraînée à au moins deux endroits par des entraînements (9, 10, 11, 12, 13, 14) devant, en fonctionnement normal, être réglés de manière synchronisée et l'un par rapport à l'autre de sorte que la chaîne de transport (2) ne soit ni tendue ni accumulée dans ses guides (15), **caractérisé par** les étapes de procédé suivantes :
a) il est sélectionné deux entraînements (9 à 14) successifs dans le sens de l'avance de la chaîne de transport ;
b) les entraînements (9 à 14) sélectionnés sont actionnés de manière asynchrone, de sorte qu'ils tendent ou accumulent le segment de chaîne (16 à 20) situé entre eux en créant une différence de longueur, un paramètre dépendant du couple d'entraînement de l'un ou des deux entraînements (9 à 14) étant mesuré ;
c) lorsque le paramètre atteint ou dépasse une valeur fixée, les entraînements (9 à 14) sont actionnés de manière asynchrone d'une quantité prédéterminée dans le sens d'une diminution de la différence de longueur créée auparavant ;
d) la position réciproque ainsi réglée des deux entraînements (9 à 14) l'un par rapport à l'autre est ensuite maintenue, en particulier lors du fonctionnement synchrone des entraînements (9 à 14) ;
e) les étapes de procédé qui précèdent sont appliquées à d'autres entraînements (9 à 14), jusqu'à ce que les longueurs de chaîne soient réglées dans tous les segments de chaîne (16 à 20) à régler.

2. Procédé selon la revendication 1 pour le réglage d'une machine de traitement présentant un segment de compensation (8) destiné à recevoir la longueur de chaîne en excès, **caractérisé par le fait que** les entraînements (9 à 14) disposés, dans le sens d'entraînement (5), entre le segment de chaîne (16 à 20) à régler et le segment de compensation (8) ensemble avec l'un entraînement sélectionné (9 à 14) et/ou tous les autres entraînements (9 à 14) ensemble avec l'autre entraînement sélectionné (9 à 14) sont actionnés de manière synchrone.

3. Procédé selon la revendication 1 ou 2, **caractérisé par le fait qu'**il est prévu, pour chaque segment de chaîne (16 à 20) à régler, un paramètre particulier dépendant du couple d'entraînement.

4. Procédé selon l'une des revendications précédentes, **caractérisé par le fait que** pour chaque segment de chaîne (16 à 20) à régler est prévue une quantité prédéterminée particulière pour la diminution de la différence de longueur créée auparavant.

5. Procédé selon l'une des revendications précédentes, **caractérisé par le fait que** dans le cadre des étapes de procédé b et c, le segment de chaîne (16 à 20) à régler est tout d'abord tendu, jusqu'à ce que soit atteinte une première valeur de paramètre, et ensuite accumulé, en enregistrant la longueur de chaîne requise à cet effet, jusqu'à ce que soit atteinte une deuxième valeur de paramètre, ou inversement, et que la quantité de l'étape de réglage suivante est fonction de la longueur de chaîne enregistrée.

6. Procédé selon l'une des revendications précédentes, **caractérisé par le fait que** les entraînements (9 à 14) peuvent être actionnés électriquement et que le procédé peut être mis en oeuvre automatiquement au moyen d'un microprocesseur programmé de manière appropriée.

7. Procédé selon la revendication 6, **caractérisé par le fait que** les entraînements (9 à 14) sont munis de capteurs de rotation destinés à déterminer leurs positions angulaires réciproques, que les position angulaires peuvent être mémorisées et que la synchronisation s'effectue par voie électrique par l'activation des entraînements (9 à 14).

8. Procédé selon l'une des revendications précédentes, **caractérisé par le fait que** les entraînements (9 à 14) présentent des moteurs électriques dont la consommation de courant est mesurée comme paramètre dépendant du couple d'entraînement.

9. Procédé selon l'une des revendications précédentes, **caractérisé par le fait qu'**un premier entraînement électrique (9 à 14) disposé, dans le sens de l'avance de la chaîne de transport (2), après le segment de compensation (8) et avant le segment de chaîne à régler (16 à 20) est actionné de manière fixe et que le second entraînement électrique (9 à 14) disposé à la suite est actionné de manière synchrone avec tous les entraînements (9 à 14) suivants dans le sens de l'avance (5), jusqu'à ce que sa consommation de courant dépasse une valeur prédéterminée, que le deuxième entraînement (9 à 14) est alors arrêté avec tous les entraînements (9 à 14) suivants, ramené d'un angle de rotation déterminé dans le sens contraire au sens d'avance (5) et ensuite fixé, que le procédé est poursuivi en conséquence avec le troisième et les entraînements (9 à 14) suivants, jusqu'à ce que soit réglé le dernier segment de chaîne (16 à 20) disposé avant le segment de compensation (8).

10. Procédé selon l'une des revendications précédentes, **caractérisé par le fait qu'**un premier entraînement électrique (9 à 14) disposé, dans le sens de l'avance (5) de la chaîne de transport (2), après un segment de compensation (8) et avant le segment de chaîne à régler (16 à 20) est actionné de manière fixe et que le second entraînement électrique (9 à 14) disposé à la suite est actionné dans le sens de l'avance (5), jusqu'à ce que sa consommation de courant dépasse une valeur prédéterminée, que le deuxième entraînement (9 à 14) ensemble avec les entraînements suivants (9 à 14) sont arrêtés et que le premier entraînement (9 à 14) est tourné d'un angle de rotation déterminé dans le sens de l'avance et ensuite fixé ensemble avec le deuxième entraînement (9 à 14), que le procédé est poursuivi en conséquence avec le troisième et tous les entraînements (9 à 14) suivants, jusqu'à ce que soit réglé le dernier segment de chaîne (16 à 20) disposé avant le segment de compensation (8), les entraînements (9 à 14) disposés avant et après le segment de chaîne (16 à 29) à régler étant actionnés, chacun, de manière synchrone entre eux ou fixés ensemble.

11. Procédé selon l'une des revendications précédentes, **caractérisé par le fait que** les différences de longueur de chaîne se présentant à chaque réglage sont mesurées et mémorisées, et que leur somme est évaluée comme indicateur de l'allongement de chaîne total et/ou de l'usure de chaîne.

12. Procédé selon la revendication 11, **caractérisé par le fait que** la longueur de la flexion de chaîne dans le segment de compensation (8) est mesurée et évaluée comme indicateur de l'allongement de chaîne total et/ou de l'usure de chaîne.

13. Machine de traitement pour le traitement d'objets, en particulier machine de nettoyage de bouteilles, **caractérisée par** une commande programmée pour la mise en oeuvre d'un procédé de réglage selon l'une des revendications précédentes.
